# EUROPEAN PATENT APPLICATION

(11) **EP 4 083 554 A1**
(43) Date of publication of application: **02.11.2022**
(21) Application number: 20908314.6
(22) Date of filing: 23.12.2020
(51) Int. Cl.: F27B 7/00, F27D 1/00, C22C 19/03

(54) **NICKEL-BASE ALLOY, HEAT-RESISTANT AND CORROSION RESISTANT COMPONENT, AND COMPONENT FOR HEAT-TREATMENT FURNACE**

(30) Priority: 27.12.2019 JP 2019239016; 30.10.2020 JP 2020182292
(71) Applicant: Kubota Corporation, Osaka 556-8601 (JP)
(72) Inventor: KAMITSUJI, Ayano, Hirakata-shi, Osaka 573-8573 (JP); ASANO, Soichi, Hirakata-shi, Osaka 573-8573 (JP); ENJO, Yohei, Hirakata-shi, Osaka 573-8573 (JP); HASHIMOTO, Kunihide, Hirakata-shi, Osaka 573-8573 (JP)
(74) Representative: Ter Meer Steinmeister & Partner
(86) International application number: PCT/JP2020/048202
(87) International publication number: WO 2021/132350

(57) **Abstract**

The present invention provides a Ni-based alloy, a heat-resistant and corrosion-resistant component, and a heat treatment furnace component, all of which have excellent corrosion resistance and mechanical strength at high temperatures. The Ni-based alloy of the present invention consists of, by mass %, Al: more than 5.0% and up to 26.0%, and Zr: more than 0% and up to 5.0%, the balance being Ni and unavoidable impurities. The Ni-based alloy preferably contains more than 0% and up to 5.0% of B, by mass %, in a combined amount with Zr. Moreover, it is preferable that the Ni-based alloy has P value and Q value and satisfies a relationship of Q value ≥ 0.89 ×P value - 0.53, when the P value is obtained from a formula -18.95 + 0.1956 × Ni% + 0.1977 ×Al% + 0.2886 × Zr% + 12.4 × B%, and the Q value is obtained by dividing an area percentage of Ni₃Al precipitated on the surface of the alloy by 100.

## Description

### TECHNICAL FIELD

The present invention relates to a Ni-based alloy, and more specifically relates to a Ni-based alloy that has excellent heat resistance and corrosion resistance.

### BACKGROUND ART

In heat treatment furnaces such as firing furnaces, components exposed to a heat and a corrosive atmosphere are required to have not only heat resistance, but also corrosion resistance and mechanical strength. As an alloy used for such components, Patent Document 1 has proposed a Ni-based alloy consisting of Al: 2.0 to 5.0 wt.% and Cr: 0.8% to 4.0%, as well as Si, Mn, B, and Zr, the balance being Ni and unavoidable impurities.

### PRIOR ART DOCUMENT

### PATENT DOCUMENT

Patent Document 1: Japanese Patent Application Publication 2014-80675

### SUMMARY OF THE INVENTION

### PROBLEMS TO BE SOLVED BY THE INVENTION

In recent years, the battery market for lithium ion batteries and solid-state batteries used for electric vehicles and the like has expanded rapidly. Cathode materials of these batteries are produced using firing furnaces, such as roller hearth kilns and rotary kilns. In particular, among heat treatment furnaces, firing furnaces used for the production of cathode materials are operated in highly alkaline corrosive environments. Accordingly, heat treatment furnace components used for such firing furnaces must have further enhanced alkali corrosion resistance, mechanical strength, and the like.

An object of the present invention is to provide a Ni-based alloy, a heat-resistant and corrosion-resistant component, and a heat treatment furnace component, all of which have excellent corrosion resistance and mechanical strength at high temperatures.

### PROBLEMS TO BE SOLVED BY THE INVENTION

The Ni-based alloy of the present invention consists of, by mass %:
Al: more than 5.0% and up to 26.0%, and
Zr: more than 0% and up to 5.0%,
the balance being Ni and unavoidable impurities.

The above Ni-based alloy preferably contains B, by mass %, in an amount of more than 0% and up to 5.0% in a combined amount with Zr.

The above Ni-based alloy may contain, by mass %, B in an amount of at least 0.001%.

The above Ni-based alloy may comprise Ni₃Al precipitated on a surface of the alloy.

The above Ni-based alloy preferably has P value and Q value, and satisfies a relationship of Q value ≥ 0.89 ×P value - 0.53, when the P value is obtained from a formula -18.95 + 0.1956 × Ni% + 0.1977 ×Al% + 0.2886 × Zr% + 12.4 × B%, and the Q value is obtained by dividing an area percentage of Ni₃Al precipitated on the surface of the alloy by 100.

The above Ni-based alloy preferably has P value and Q value, and satisfies a relationship of Q value ≥ 1.75 × P value - 1.1, when the P value is obtained from a formula 5.91 - 0.0512 ×Ni% - 0.0612 ×Al%, and the Q value is obtained by dividing an area percentage of Ni₃Al precipitated on the surface of the alloy by 100.

The above Ni-based alloy preferably contains, by mass %, Al in an amount of at least 8.0%.

The above Ni-based alloy may further contain, by mass %, Y in an amount of 0.001% to 4.0%.

The above Ni-based alloy may further contain, by mass %, Ta in an amount of 0.001% to 4.0%.

The above Ni-based alloy may further contain, by mass %, W in an amount of 0.001% to 5.0%.

The heat-resistant and corrosion-resistant component of the present invention is made of the Ni-based alloy described above.

The heat treatment furnace component of the present invention is made of the Ni-based alloy described above.

The heat treatment furnace component is a retort used for firing a cathode material and has an inner surface to come into contact with the cathode material, and an outer surface to be heated by heating means, wherein the outer surface has a hardness higher than the inner surface.

Further, the heat treatment furnace component of the present invention is made of a Ni-based alloy consisting of, by mass %, Al in an amount of more than 5.0% and up to 26.0%, the balance being Ni and unavoidable impurities.

### EFFECTS OF THE INVENTION

The Ni-based alloys of the present invention have excellent corrosion resistance at high temperatures and excellent mechanical strength, such as tensile strength and 0.2% proof stress. Further, the heat-resistant and corrosion-resistant components produced from these Ni-based alloys also have excellent corrosion resistance at high temperatures and mechanical strength. Therefore, the present Ni-based alloys are suitable for use as heat treatment furnace components.

### BRIEF DESCRIPTION OF THE DRAWINGS

Fig. 1 is a graph showing the relationship between P values calculated from the four elements system and Q values obtained from Ni₃Al.
Fig. 2 is a graph showing the relationship between P values calculated from the two elements system and Q values obtained from Ni₃Al.

### MODE FOR CARRYING OUT THE INVENTION

The inventors have found that the Ni-based alloy having excellent corrosion resistance and high strength at high temperatures can be obtained by adjusting an amount of Al to precipitate the intermetallic compound Ni₃Al in the Ni-based alloy. The inventors also have found that the corrosion resistance at high temperatures can be further enhanced by adding an adequate amount of Zr and B to the Ni-based alloy containing Al and distributing Zr and B to the grain boundary.

The Ni-based alloy of the present invention can be used, for example, as a casting alloy for the production of various structural members depending on the desired product form, and is particularly suitable for applications that require heat resistance and corrosion resistance. Further, the Ni-based alloy of the present invention is not subject to any change in the properties even in a high-oxygen atmosphere at 800 to 1000 °C or in a high alkaline corrosive environment, so that the reaction with the materials to be used is suppressed. Therefore, the Ni-based alloy of the present invention is particularly suitable for heat treatment furnace components, such as materials for core tubes of rotary kilns. Core tubes can be produced by various production methods, such as centrifugal casting, hot forging, overlaying, and thermal spraying. The Ni-based alloy of the present invention is not limited to the applications mentioned above but can also be applied to various heat-resistant and corrosion-resistant components and molten aluminum components that are used in firing devices (e.g., firing trays and firing rollers) where ceramics have been used. These examples are not intended to limit the applications of the Ni-based alloy according to the present invention.

### <Reason for Limiting Compositions>

The Ni-based alloy of the present invention contains the following compositions. The symbol "%" indicates mass % unless otherwise specified.

### Al: more than 5.0% and up to 26.0%

Al forms an oxide film on the material surface to improve oxidation resistance. Further, Al produces an intermetallic compound Ni₃Al with Ni contained in the Ni-based alloy, thereby contributing to the improvement of corrosion resistance at high temperatures. To develop these functions, Al should be added to contain in an amount of more than 5.0%. The lower limit of the Al content should be 5.2%, and preferably 8.0%. On the other hand, if the Al content exceeds 26.0%, the production of Ni₃Al reduces, or Ni₃Al is not produced. Therefore, the upper limit of the Al content is 26.0%.

According to the Ni-Al binary phase diagram, an intermetallic compound of Ni₃Al precipitates as the Ni₃Al phase in an as-cast state, when the amount of Al is 8.0% to 17.7% in the Ni-based alloy that contains Al. The reason is that when the Ni-Al alloy is cooled to ambient temperature after casting, even the natural cooling in the air is close to the condition under rapid cooling. On the other hand, if the Al content is less than 8.0% or exceeds 17.7%, low-temperature heat treatment is required for precipitating the Ni₃Al phase after casting. Therefore, to obtain a Ni-based alloy having precipitated Ni₃Al phase without the need for heat treatment after casting, the Al content is preferable to be at least 8.0% and up to 17.7%. When the low-temperature heat treatment is performed after casting, the Al content may be at least 5.0% and the upper limit thereof may be less than 8.0%, or the lower limit thereof may be more than 17.7% and the upper limit may be 26.0%. The Al content is more preferably at least 9.5%, or at least 11.0%.

### Ni: remainder

Ni is a fundamental element in the Ni-based alloy that has high ductility at high temperatures. Ni is combined with Al to produce the intermetallic compound Ni₃Al, thereby contributing to improvement of the corrosion resistance at high temperatures.

### Zr: more than 0% and up to 5.0%

Zr improves the weld cracking susceptibility of the Ni-based alloy, and can be selectively added in an amount of more than 0% and up to 5.0%. Zr is distributed in the grain boundary of the Ni-based alloy, so that cracking susceptibility in the crystal grain boundary can be reduced. Further, the combined addition of Zr and Ni increases corrosion resistance, and also enhances high-temperature strength and ductility. On the other hand, even if the Zr content is excessively included, the effect of improving the weld cracking susceptibility is saturated. Thus, the upper limit of the Zr content should be 5.0%. The upper limit of the Zr content is desirably 4.0%, and more desirably 2.5% or 1.0%.

### B: at least 0.001%, or more than 0% and up to 5.0% in a combined amount with Zr

B is distributed in the grain boundary to increase ductility and enhance creep rupture strength at high temperatures, and can be selectively added. When B is added, these effects are achieved even if the amount of B is trace, but should be at least 0.001% preferably at least 0.008%, more preferably at least 0.01%. More preferably, B is more than 0% and up to 5.0% in a total amount of Zr and B. However, an excessive amount of B increases weld cracking susceptibility and reduces weldability. Thus, the upper limit of the B content is preferably 2.5%, more preferably 1.0%.

### Y: 0.001% to 4.0%

Y improves the oxidation resistance of the Ni-based alloy and may be selectively added. However, an excessive amount of Y reduces hot workability. Therefore, when Y is added, the upper limit is 4.0%, preferably 2.8%, more preferably 1.0%.

### Ta: 0.001% to 4.0%

Ta forms carbide with C, which is contained as an unavoidable impurity in the Ni-based alloy, and refines crystal grains in the Ni-based alloy, thereby enhancing the high-temperature strength of the Ni-based alloy, and also increasing corrosion resistance. So, Ta can be selectively added. However, an excessive amount of Ta may lead to an inhibition of workability and a reduction of strength in the Ni-based alloy. Therefore, when Ta is added, the upper limit is 4.0%, preferably 2.8%, more preferably 1.0%.

### W: 0.001% to 5.0%

W dissolves in the Ni-based alloy to enhance creep rupture strength at high temperatures. The combined addition of W and Ni contributes to improvement of oxidation resistance. So, W can be selectively added. However, an excessive amount of W leads to a reduction of tensile strength, and rather reduces creep rupture strength at high temperatures. Therefore, when W is added, the upper limit is 5.0%, preferably 2.4%, more preferably 1.0%.

### Unavoidable impurities

In the ordinary melting technique, some impurities are unavoidably contained. Examples of such unavoidable impurities include Si, Mn, Fe, S, Mg, Cu, Zn, O, P, N, and H. Each of these elements is allowed if the amount is up to 0.8%.

In addition, the following elements may be selectively added.

### Cr: more than 0% and up to 1.0%

Cr is an element that increases oxidation resistance by combined addition with N and may be selectively added. On the other hand, an excessive amount of Cr is undesirable in view of the environmental circumstances. Therefore, when Cr is added, the amount is up to 1.0%, preferably less than 0.01%.

In addition to the above-described composition range of each element, the Ni-based alloy is preferable to satisfy the following relationship:

When P value is a value obtained from a formula -18.95 + 0.1956 × Ni% + 0.1977 × Al% + 0.2886 × Zr% + 12.45 × B%, and Q value is obtained by dividing an area percentage of Ni₃Al precipitated on the surface of the alloy by 100, the Ni-based alloy satisfies a relationship of Q value ≥ 0.89 × P value - 0.53.

If any of the elements described as the P value in the above formula is not contained, the value of this element is considered zero.

The P value is defined as the content of each element for suitable precipitation of the intermetallic compound Ni₃Al, which provides excellent corrosion resistance and strength at high temperatures on the surface of the Ni-based alloy. The P value and the relationship between the P value and Q value are determined by the process of obtaining data regarding the presence or absence of precipitation of the intermetallic compound Ni₃Al, corrosion resistance, and high-temperature strength from Ni-based alloys that were produced while changing the contents of these components in various ways, and analyzing the influence of Ni, Al, Zr, and B on the area percentage of the intermetallic compound Ni₃Al. The coefficients of Ni, Al, Zr, and B recited in the P value, and the coefficients of the relationship between the P and Q values were determined by the level of influence of each element on the precipitation of the intermetallic compound Ni₃Al.

When the relationship of Q value≥ 0.89 × P value - 0.53 is satisfied, the intermetallic compound Ni₃Al is suitably formed not only on the surface of the Ni-based alloy, but also in the inside matrix thereof. Therefore, the Ni-based alloy is able to have corrosion resistance and high-temperature strength.

P value may be 2 elements system of Ni and Al. In this case, the P value is a value obtained from a formula 5.91 - 0.0512 × Ni% - 0.0612 × Al%. Therefore, the relationship to be satisfied is Q value ≥ 1.75 × P value - 1.1.

Heat-resistant and corrosion-resistant components and heat treatment furnace components can be produced by incorporating the above elements within the above composition range and subjecting to static casting or the like. Of course, various production methods, such as centrifugal casting, hot forging, overlaying, and thermal spraying, can be employed.

As heat treatment furnace components made of the Ni-based alloy of the present invention have excellent alkali corrosion resistance, they can be used, for example, in a cylindrical or tray-like shape, as retorts for firing cathode materials for lithium secondary batteries. The retort has an inner surface to come into contact with the cathode material in powder form, and an outer surface to be heated by heating means. During the process of firing, the cathode material deposits on the inner surface of the retort. Therefore, it is necessary to knock the outer surface of the retort with a striking tool, such as a hammer, and peel off the deposited powder by the impact of striking. For this reason, heat treatment furnace components, such as retorts, are required to have knocking resistance. That is, the outer surface is required to have a high hardness to withstand knocks.

The Ni-based alloy of the present invention is able to have a hardness gradient (hardness difference) in the thickness direction. Specifically, a heat treatment furnace component having a high hardness is produced by subjecting the Ni-based alloy of the present invention to centrifugal casting or static casting, such that the structure can be densified on the side closer to the mold with a faster cooling speed. The heat treatment furnace components such as retorts can have an enhanced knocking resistance by applying the higher hardness side to the outer surface to be knocked.

### EXAMPLE 1

Test pieces of Ni-based alloys having the alloy compositions shown in Table 1 were prepared by the following production method. After identifying the precipitate phase of Ni-based intermetallic compounds etc. and checking the casting quality, an alkali corrosion test and a high-temperature tensile test were carried out. The sample examples provided on this EXAMPLE 1 are Inventive Examples 1-11 and Comparative Examples 1-5.

### <Method for Producing Test Piece>

First, feedstock materials of elements were prepared, and the compositions of each component element are shown in Table 1 below. The feedstock materials were introduced in an alumina crucible (inner diameter is 185 mm and height is 330 mm), and melted in a high-frequency melting furnace with argon sealing. The melting temperature was 1600 to 1720 °C. Then, the molten metal of the Ni-based alloy was transferred to a ladle and cast in an air atmosphere, and an ingot of the Ni-based alloy was produced. For Inventive Example 10, the Ni₃Al phase precipitated by heat treatment at 200 °C after casting. Test pieces for subjecting to various tests were prepared from the ingots as obtained.

**[Table 1]**

| | Ni | Al | Zr | B | Y | Ta | W | C | Si | Mn | S | Mg | Cu | Cr |
|---|---|---|---|---|---|---|---|---|---|---|---|---|---|---|
| Inventive Ex. 1 | 85.4 | 14.6 | | | | | | | | | | | | |
| Inventive Ex. 2 | 90.0 | 10.0 | | | | | | | | | | | | |
| Inventive Ex. 3 | 86.6 | 11.3 | 2.1 | 0.015 | | | | | | | | | | |
| Inventive Ex. 4 | 88.8 | 10.6 | 0.6 | 0.016 | 0.01 | | | | | | | | | |
| Inventive Ex. 5 | 73.9 | 25.4 | 0.08 | 0.08 | 0.5 | | | | | | | | | |
| Inventive Ex. 6 | 88.0 | 8.75 | 3.0 | | | | 0.01 | 0.003 | | | | 0.26 | 0.003 | |
| Inventive Ex. 7 | 86.4 | 9.8 | 2.5 | 0.015 | | 1.30 | | | | | | | | |
| Inventive Ex. 8 | 85.3 | 13.0 | 1.6 | 0.015 | 0.1 | | | | | | | | | |
| Inventive Ex. 9 | 82.8 | 15.5 | 1.77 | 0.0157 | | | | | | | | | | |
| Inventive Ex. 10 | 92.3 | 6.4 | | 0.001 | 0.01 | 1.30 | | | | | | | | |
| Inventive Ex. 11 | 87.9 | 9.3 | | 2.7 | 0.01 | 0.1 | | | | | | | | |
| Compara. Ex. 1 | 85.8 | 7.8 | 1.8 | | | | 2.4 | | | | | | | 2.2 |
| Compara. Ex. 2 | 92.0 | 4.0 | | | | | | | 1.5 | 0.5 | | | | 2 |
| Compara. Ex. 3 | 95.7 | 4.3 | | | | | | 0.014 | | | 0.004 | | | |
| Compara. Ex. 4 | 70.4 | 29.6 | | | | | | | | | | | | |
| Compara. Ex. 5 | 78.6 | 14.6 | 6.8 | 0.015 | | | | | | | | | | |

In Table 1, each element is expressed by "mass %." Unavoidable impurities are not described in this Table.

After the casting quality of the ingots and test pieces was checked, the precipitate phase of Ni-based intermetallic compounds etc. was identified, and an alkali corrosion test and a high-temperature tensile test were carried out.

### <Check of Casting Quality>

To check the casting quality, liquid penetrant testing (PT) was performed on the cut surface of each ingot, and the formation of shrinkage cavities and cracks inside the ingot was checked. When a pattern specified by the PT was not visually found, the casting quality was evaluated as "circle mark (Good)." On the other hand, when the pattern specified by the PT was visually found, the casting quality was evaluated as "cross mark (Bad)."

### <Identification of Precipitate Phase>

The precipitate phase such as Ni-based intermetallic compounds was identified by an X-ray diffractometer (XRD: produced by Rigaku Corporation, and trade name is SmartLab). Specifically, each test piece was cut at the central part. The cut surface was polished to a mirror finish and etched by electrolysis in an oxalic acid bath. The etched cut surface was degreased with ethanol and dried, and then was scanned by XRD to identify the precipitate phase of each test piece. The results are shown in the column "Presence or Absence of precipitation" in Table 3.

### <Alkali Corrosion Test>

The alkali corrosion test was performed on the test pieces for which the casting quality was evaluated as "circle mark (Good)." In the alkali corrosion test, two plate-like test pieces (vertical width (10 mm), horizontal width (40 mm), and thickness (10 mm)) for observation were prepared from each test piece, and the test surface was polished with #40 abrasive paper. Then, each test piece having a test surface on which an alkali corrosive powder such as an alkali metal salt for the alkali corrosion test is placed was fired at 900°C for 5 hours in an atmosphere of at least 90% oxygen. This firing operation was repeated 10 times each by changing the alkali corrosive powder to another one. After all of the firing operations were completed, each test piece was cut at the central part thereof, and the cut surface was polished to a mirror finish and etched by electrolysis in an oxalic acid bath. The etched surface was degreased with ethanol and dried. Then, the surface was observed with a digital microscope (made by Keyence Corporation). The alkali corrosion trajectory extending from the test surface in the thickness direction was observed and a total of thickness loss and grain boundary corrosion length was measured as the corrosion depth. When the level of alkali corrosion trajectory was too severe to measure the corrosion depth, or the corrosion depth was 1.5 mm or more, the result of the alkali corrosion test was indicated as "cross mark (Bad)." When the corrosion depth in the alkali corrosion test was at least 1.0 mm and less than 1.5 mm, the result was indicated as "triangle mark (Good)." When the corrosion depth was less than 1.0 mm, the result was indicated as "circle mark (Excellent)."

### <High-Temperature Tensile Test>

The test pieces having the casting quality evaluated as "circle mark (Good)" were subjected to a high-temperature tensile test. The test was conducted in accordance with JIS G 0567. The tensile strength at 900°C, 0.2% proof stress, and elongation were measured. Comparative Example 1 was not conducted for the 0.2% proof stress test.

Table 2 shows the test results on the test pieces of the Inventive Examples and Comparative Examples.

**[Table 2]**

| | Q value | P value (4 elements) | P value (2 elements) |
|---|---|---|---|
| Inventive Ex. 1 | 0.819 | 0.641 | 0.644 |
| Inventive Ex. 2 | 0.551 | 0.631 | 0.690 |
| Inventive Ex. 3 | 0.962 | 1.013 | 0.785 |
| Inventive Ex. 4 | 0.801 | 0.882 | 0.716 |
| Inventive Ex. 5 | 0.200 | 1.553 | 0.570 |
| Inventive Ex. 6 | 0.450 | 0.853 | 0.870 |
| Inventive Ex. 7 | 0.662 | 0.793 | 0.887 |
| Inventive Ex. 8 | 0.996 | 0.960 | 0.745 |
| Inventive Ex. 9 | 0.811 | 1.000 | 0.727 |
| Inventive Ex. 10 | 0.383 | 0.379 | 0.793 |
| Inventive Ex. 11 | 0.457 | 33.695 | 0.841 |
| Compara. Ex. 1 | 0.500 | -0.106 | 1.040 |
| Compara. Ex. 2 | 0.000 | -0.164 | 0.955 |
| Compara. Ex. 3 | 0.000 | 0.619 | 0.747 |
| Compara. Ex. 4 | 0.000 | 0.672 | 0.494 |
| Compara. Ex. 5 | 0.589 | 1.457 | 0.993 |

### <Results of Casting Quality>

With reference to Table 2, the casting quality was good in all of the Inventive Examples and Comparative Examples 1, 2, and 5, and there was not found shrinkage cavities or cracks. On the other hand, shrinkage cavities and cracks were observed in Comparative Examples 3 and 4, which were insufficient in the casting quality. The reason for the inferior casting quality of Comparative Examples 3 and 4 is considered that the melting point of these examples was high and a casting temperature was insufficient.

### <Identification Results of Precipitate Phase>

With regard to the precipitate phase, intermetallic compounds were observed on the surface of the test pieces in all of the Inventive Examples and Comparative Examples 1, 4, and 5. On the other hand, no precipitation of intermetallic compounds was observed in Comparative Examples 2 and 3. This reason is considered that the Al content in the Comparative Examples 2 and 3 was up to 5.0%, and the amount of Al to form intermetallic compounds with Ni was insufficient. When the precipitate phase was checked for the Examples wherein the precipitation was observed, the intermetallic compounds that mainly comprise Ni₃Al were identified in all of the Inventive Examples and Comparative Examples 1 and 5, and the intermetallic compounds that mainly comprise NiAl were identified in Comparative Example 4. The Comparative Example 4 wherein the precipitated intermetallic compound was mainly NiAl was insufficient in the workability of the Ni-based alloy.

### <Alkali Corrosion Test Results>

The alkali corrosion test was conducted for the Inventive Examples and Comparative Examples having the casting quality evaluated as "circle mark (Good)" as described above. However, the alkali corrosion test was not conducted for Comparative Example 1 due to environment circumstances because this example contains Cr. The alkali corrosion test results show that all of the Inventive Examples and Comparative Example 5 were evaluated as "triangle mark (Good)" or "circle mark (Excellent)." This means that Ni₃Al precipitated as an intermetallic compound was very effective to improve the alkali corrosion resistance at high temperatures of the Ni-based alloy, as compared to Comparative Example 2 having no intermetallic compounds precipitated on the surface.

### <High-Temperature Tensile Test>

The results of the high-temperature tensile test revealed that all of the Inventive Examples have superior tensile strength and 0.2% proof stress to Comparative Examples 2 and 5. For Comparative Example 2, the elongation was very high because Al amount is low and Ni amount is high. Inventive Examples had a high-temperature strength almost equivalent to that of the Comparative Example 1, which had high tensile strength and good elongation, and are considered useful as the Ni-based alloy replaceable with the Comparative Example 1, which involves the environmental circumstances in the alkali corrosion test.

### <Comparison Between Inventive Examples>

In comparison between the Inventive Examples with respect to the alkali corrosion test results, Inventive Examples 3, 4, and 7 to 9 are all "circle mark (Excellent)," while Inventive Examples 1, 2, 5, 6, 10, and 11 are "triangle mark (Good)" which are slightly lower than the Inventive Examples 3, 4, and 7 to 9. In addition, Inventive Examples 1, 2, 5, 6, 10, and 11 are slightly lower than Inventive Examples 3, 4, and 7-9 with respect to the tensile strength and 0.2% proof stress. The reason for the higher corrosion resistance and high-temperature strength of the Inventive Examples 3, 4, and 7 to 9 than those of Inventive Examples 1 and 2 is considered that Zr and B contained in the Examples 1 and 2 are distributed in the grain boundary of the Ni-based alloy, improving the alkali corrosion resistance at high temperatures. The reason for the lower corrosion resistance and high-temperature strength of Inventive Example 5 is that a lot of NiAl phase were precipitated, because a larger amount of Al was included. The reason for the lower corrosion resistance and high-temperature strength of Inventive Examples 6, 10, and 11 is considered that these Examples contain only one of Zr or B, and the effect on the grain boundary reinforcement was weaker than when both Zr and B were included. As for Inventive Example 10, Al content was 6.4% and was slightly less than that of other Inventive Examples. This is considered another reason for the lower corrosion resistance and high-temperature strength of Inventive Example 10. Therefore, the Al content should be at least 8.0%.

### EXAMPLE 2

The Inventive Examples and Comparative Examples in EXAMPLE 1 were measured about the area percentage of the intermetallic compound Ni₃Al formed on the surface of each test piece. The value obtained by dividing the area percentage of Ni₃Al precipitated on the surface of the alloy by 100 is defined as Q value. Table 3 shows the measured Q values. In addition, with regard to 4 elements of Ni, Al, Zr, and B, and 2 elements of Ni and Al, the influence of these combined elements on the area percentage of the intermetallic compound Ni₃Al was determined by regression analysis.

**[Table 3]**

| | Casting Quality | Presence or Absence of Inter metallic Compound Precipitate | Alkali Corrosion Test | Tensile Strength [Mpa] | 0.2% Proof Stress [Mpa] | Elongation [%] |
|---|---|---|---|---|---|---|
| Inventive Ex. 1 | ○ | ○ | △ | 210 | 177 | 1.4 |
| Inventive Ex. 2 | ○ | ○ | △ | 110 | 95 | 0.5 |
| Inventive Ex. 3 | ○ | ○ | ○ | 544 | 416 | 2.8 |
| Inventive Ex. 4 | ○ | ○ | ○ | 525 | 386 | 4.8 |
| Inventive Ex. 5 | ○ | ○ | △ | 137 | 203 | 3.8 |
| Inventive Ex. 6 | ○ | ○ | △ | 194 | 226 | 1.3 |
| Inventive Ex. 7 | ○ | ○ | ○ | 348 | 281 | 3.3 |
| Inventive Ex. 8 | ○ | ○ | ○ | 434 | 482 | 4.3 |
| Inventive Ex. 9 | ○ | ○ | ○ | 288 | 402 | 2.1 |
| Inventive Ex. 10 | ○ | ○ | △ | 183 | 131 | 1.1 |
| Inventive Ex. 11 | ○ | ○ | △ | 198 | 139 | 1.9 |
| Compara. Ex. 1 | ○ | ○ | not tested due to environmetal circumstances | 240 | - | 0.6 |
| Compara. Ex. 2 | ○ | × | × | 80 | 40 | 115 |
| Compara. Ex. 3 | × | × | not tested because of inferior eating quality | | | |
| Compara. Ex. 4 | × | ○ | not tested because of inferior eating quality | | | |
| Compara. Ex. 5 | ○ | ○ | △ | 97 | 85 | 0.8 |

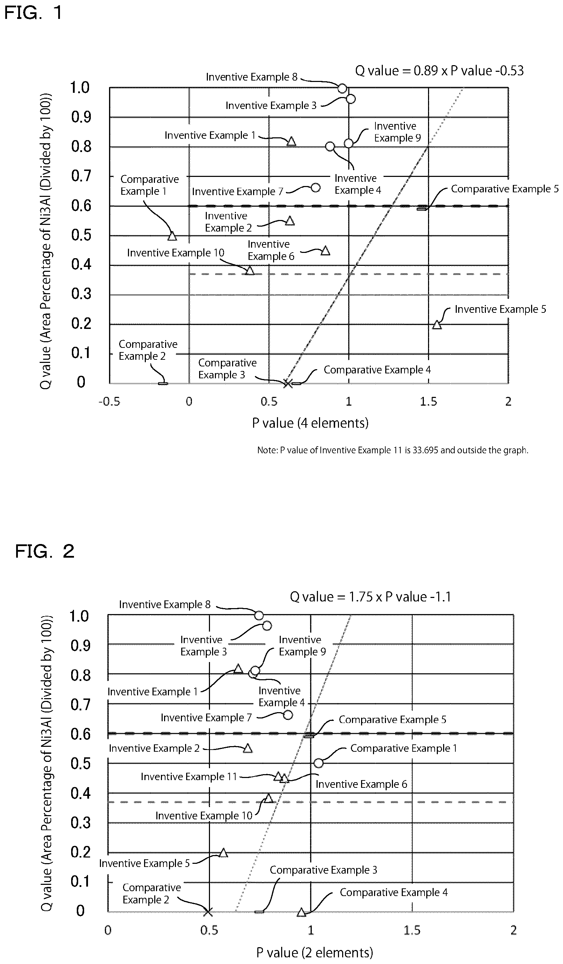

As for 4 elements of Ni, Al, Zr, and B, the results revealed that the intermetallic compound Ni₃Al suitably precipitated on the Ni-based alloy when "Q value≥ 0.89 × P value - 0.53" is satisfied, wherein the P value is given as "-18.95 + 0.1956 × Ni% + 0.1977 × Al% + 0.2886 × Zr% + 12.45 × B%." Fig. 1 shows the relationship of P value and Q value of the Inventive Examples and Comparative Examples, wherein the Q value is a value of an area percentage of the precipitated intermetallic compound Ni₃Al divided by 100 and is indicated by the formula "0.89 × P value - 0.53." In Fig. 1, the symbols "circle mark," "triangle mark," "cross mark," and "minus mark" correspond to those of the alkali corrosion test results in EXAMPLE 1. To achieve corrosion resistance and an enhanced strength at high temperatures, the Q value (an area percentage of the precipitated Ni₃Al divided by 100) should be at least 0.3, preferably at least 0.38, more preferably at least 0.6. From this result, for example, when at least 60% of the area percentage (i.e., 0.6 in fractional form) of the intermetallic compound Ni₃Al is wanted to achieve, the contents of Ni, Al, Zr, and B should be controlled such that the Q value is at least 0.6 in the formula "Q value≥ 0.89 × P-value - 0.53."

As for 2 elements of Ni and Al, the results revealed that the intermetallic compound Ni₃Al suitably precipitated on the Ni-based alloy when "Q value≥ 1.75 × P value - 1.1" is satisfied, wherein the P value is given as 5.91-0.0512 × Ni% - 0.0612 × Al%. Fig. 2 shows the relationship of P value and Q value of the Inventive Examples and Comparative Examples, wherein the Q value is a value of an area percentage of the precipitated intermetallic compound Ni₃Al divided by 100 and is indicated by the formula "1.75 × P value - 1.1." In Fig. 2, the symbols "circle mark," "triangle mark," "cross mark," and "minus mark" correspond to those of the alkali corrosion test results in EXAMPLE 1. To achieve corrosion resistance and an enhanced strength at high temperatures, the Q value (a value of an area percentage of the precipitated intermetallic compound Ni₃Al divided by 100) should be at least 0.38, preferably at least 0.6. From this result for example, when at least 60% (i.e., 0.6 in fractional form) of the area percentage of the intermetallic compound Ni₃Al is wanted to achieve, the contents of Ni and Al should be controlled such that the Q value is at least 0.6 in the formula "Q value≥ 1.75 × P value - 1.1."

### EXAMPLE 3

Cylindrical retorts (Inventive Examples 12 and 13) were made by centrifugal casting the two types of Ni-based alloys of the present invention. In both cases, the gravity multiple G number of the outer periphery of the centrifugal casting was 80 G to 250 G. The retorts of Inventive Examples 12 and 13 were cast into the dimension of 100 mm in outer diameter and 15 mm in thickness and then subjected to the machining process into the size of 80 mm in inner diameter and 10 mm in thickness. In a retort, the outer surface is a surface to be heated by the heating means and the inner surface after machining process is a surface (inner surface) in contact with the cathode material. Table 4 shows compositions of Inventive Examples 12 and 13, and Q values, P values of the four elements system, and P values of the two elements system on the inner surface.

**[Table 4]**

| | Ni | Al | Zr | B | Q value | P value (4 elements) | P value (2 elements) |
|---|---|---|---|---|---|---|---|
| Inventive Ex. 12 | 86.9 | 11.3 | 0.68 | 0.017 | 0.8576 | 0.690 | 0.769 |
| Inventive Ex. 13 | 83.7 | 14.3 | 1.87 | 0.016 | 0.8167 | 0.979 | 0.752 |

Retorts of Inventive Examples 12 and 13 show that the P value of the 4 elements system satisfies "Q value≥ 0.89 × P value - 0.53," and the P value of the two elements system also satisfies "Q value≥ 1.57 × P value - 1.1."

For Inventive Example 12, Vickers hardness was measured for the A-side (the molten metal injection side and the B-side (the side opposite the molten metal injection side) of the test piece, at an outer surface after casting (at a position of 0.5 mm from the post-cast outer surface), at a thickness center (at a position of 7.5 mm from the post-cast outer surface), and at an inner surface after machining process (at a position of 0.5 mm from the post-machined inner surface). Further, the area percentage of the Ni₃Al phase and NiAl phase on the cast outer surface and the machined inner surface were measured. The results are shown in Table 5.

**[Table 5]**

| Inventive Ex. 12 | | Post-cast Outer Surface | Post-cast Thickness Center | Post-machined Inner Surface |
|---|---|---|---|---|
| Vickers Hardness (HV) | A-side | 285 | 194 | 198 |
| | B-side | 252 | 187 | 193 |
| Area Percentage of NI3Al Phase (%) | A-side | 81.7 | 83.1 | 81.5 |
| | B-side | 84.2 | 85.8 | 83.8 |
| Area Percentage of Ni Phase (%) | A-side | 18.0 | 16.8 | 18.3 |
| | B-side | 15.4 | 14.1 | 16.0 |

With reference to Table 5, the Vickers hardness of the post-cast outer surface on both A-side and B-side is about 1.3 to 1.4 times higher than that of the post-cast thickness center and the post-machined inner surface. The reason for this is considered that during casting process, the outer surface from the mold was cooled faster than the post-machined inner surface that was not exposed to the mold, resulting in that the structure of the outer surface was densified. The reason is further considered that the area percentage of hard Ni₃Al-phase precipitated on the post-cast outer surface increased as compared to the post-machined inner surface, and the area percentage of Ni-phase decreased as compared to the post-machined inner surface.

With reference to Inventive Example 12, a heat treatment furnace component (retort) having an outer surface with a hardness higher than an inner surface can be produced by casting the Ni-based alloy of the present invention. As shown in EXAMPLES 1 and 2, the Ni-based alloy of the present invention has excellent alkali corrosion resistance. Therefore, the heat treatment furnace component made of the Ni-based alloy of the present invention has excellent alkali corrosion resistance at the inner surface that is brought into contact with the cathode material and also has excellent hardness at the outer surface that is subjected to impact by knocking. Thus, the heat treatment furnace component can be suitably used for retorts.

A comparison between A-side and B-side after casting in Table 5 reveals that the hardness of the A-side is higher than the B-side. Since the deposition of the cathode material is likely to occur at downstream of the retort, the knocking resistance of the retort inside the furnace can be increased by disposing the A-side at the downstream side of the retort.

For Inventive Example 13, Vickers hardness was measured at an outer surface after casting (at a position of 0.5 mm from the post-outer outer surface), and at an inner surface after machining process (at a position of 0.5 mm from the post-machined inner surface). Further, the area percentage of the Ni₃Al phase and NiAl phase on the outer surface and the inner surface were measured. The results are shown in Table 6.

**[Table 6]**

| Inventive Ex. 13 | Post-cast Outer Surface | Post-machined Inner Surface |
|---|---|---|
| Vickers Hardness (HV) | 405 | 324 |
| Area Percentage of NI3Al Phase (%) | 81.7 | 81.7 |
| Area Percentage of Ni Phase (%) | 18.1 | 17.9 |

With reference to Table 6, the Vickers hardness of the post-cast outer surface is about 1.25 times higher than that of the post-machined inner surface. The reason for this is that during casting process, the outer surface from the mold was cooled faster than the post-machined inner surface that was not exposed to the mold, resulting in that the structure of the post-cast outer surface was densified, as in Inventive Example 12. On the other hand, there was not found a significant difference concerning the area percentages of the Ni₃Al-phase and the NiAl-phase.

The heat treatment furnace component (retort) of the Ni-based alloy of the present invention obtained with reference to Inventive Example 13 is useful as the same as that of Inventive Example 12.

In Example 3 described above, the centrifugal casting process was employed to make a cylindrical retort, but instead, the static casting process may be employed. Further, the retort is not limited to a cylindrical shape, but may be a tray-like shape. In the case of the tray-like shape, the side opposite the mold is applied as the outer surface of the retort. The inner surface after machining operation becomes the surface in contact with the cathode material.

The above description is to explain the present invention, and should not be construed as limiting the invention to the scope of the claims or reducing the scope of the claims. Moreover, the present invention is not limited to the above embodiments, and of course can be modified in various ways within the technical scope recited in the claims.

For example, the composition of the Ni-based alloy described above may further optionally contain other elements or replace some of the elements with other elements, as mentioned below.

Zr may be replaced in all or in part with Ti and Hf that are included in a Group 4 element, the same group as Zr, in the periodic table. In this case, the content of these elements should be up to 1.0%.

B may be replaced in all or in part with Ga, In, and Tl that are included in a Group 13 element, the same group as B, in the periodic table. In this case, the content of these elements should be up to 1.0%.

Y may be replaced in all or in part with rare-earth elements and Sc that are included in a Group 3 element, the sane group as Y, in the periodic table. In this case, the content of these elements are the same as the range of Y described above. The rare-earth elements are 15 lanthanum series elements from La to Lu in the periodic table.

Ta may be replaced in all or in part with V and Nb that are included in a Group 5 element, the same group as Ta, in the periodic table. In this case, the content of these elements should be up to 2.0%.

W may be replaced in all or in part with W that is included in a Group 6 element, the same group as W, in the periodic table. In this case, the content of this element should be up to 2.0%.

### Group 14 elements (C, Si, Ge, Sn, and others): more than 0% and up to 1.0%

C, Si, Ge, Sn, and other elements included in a Group 14 element in the periodic table increase an elongation property of the Ni-based alloy at high temperatures, and improve the oxidation resistance of the Ni-based alloy. Therefore, these elements may be optionally contained within the range that does not affect the characteristics of the Ni-based alloy of the present invention. When these elements are contained, the content is up to 1.0% in total.

When at least one element selected from the group consisting of Group 3 to 6 elements, Group 13 element excepting Al, and Group 14 element is added to the Ni-based alloy, the preferable amount is more than 0% and up to 2.5% in total.

The heat treatment furnace component made of the Ni-based alloy of the present invention can be used, for example, as the firing means of the production process of cathode active materials for lithium secondary batteries. In a specific embodiment, the heat treatment furnace component is used as the firing means of the step of firing feedstock material containing a mixture of a composite metal compound and a lithium compound (e.g., up to 5.0 mass %), or a reactant of a composite metal compound and a lithium compound. In the firing means, a material of the part that comes into contact with the feedstock material contains up to 95.0 mass % of Ni, and less than 1.0 mass %% of Cr, and may contain as other elements at least one of Fe, Al, Ti, W, Mo, Cu, Y, Zr, Co, Si, Mn, and B. The heat treatment furnace component made of the Ni-based alloy of the present invention can be applied to the inner wall of the firing means.

## Claims

1. A Ni-based alloy consisting of, by mass %:
Al: more than 5.0% and up to 26.0%, and
Zr: more than 0% and up to 5.0%,
the balance being Ni and unavoidable impurities.

2. The Ni-based alloy according to claim 1, wherein the alloy contains more than 0% and up to 5.0% of B, by mass %, in a combined amount with Zr.

3. The Ni-based alloy according to claim 2, wherein the alloy contains at least 0.001% of B, by mass %.

4. The Ni-based alloy according to claim 1 or 3, wherein the alloy has Ni₃Al precipitated on a surface thereof.

5. The Ni-based alloy according to claim 4, wherein the alloy has P value and Q value, and satisfies a relationship of Q value ≥ 0.89 ×P value - 0.53, when the P value is obtained from a formula -18.95 + 0.1956 × Ni% + 0.1977 ×Al% + 0.2886 × Zr% + 12.4 × B%, and the Q value is obtained by dividing an area percentage of Ni₃Al precipitated on the surface of the alloy by 100.

6. The Ni-based alloy according to claim 4 or 5, wherein the alloy has P value and Q value, and satisfies a relationship of Q value ≥ 1.75 × P value - 1.1, when the P value is obtained from a formula 5.91 - 0.0512 × Ni% - 0.0612 × Al%, and the Q value is obtained by dividing an area percentage of Ni₃Al precipitated on the surface of the alloy by 100.

7. The Ni-based alloy according to any one of claims 1 to 6, wherein the alloy contains at least 8.0% of Al, by mass %.

8. The Ni-based alloy according to any one of claims 1 to 7, wherein the alloy further contains 0.001% to 4.0% of Y, by mass %.

9. The Ni-based alloy according to any one of claims 1 to 8, wherein the alloy further contains 0.001% to 4.0% of Ta, by mass %.

10. The Ni-based alloy according to any one of claims 1 to 9, wherein the alloy further contains 0.001% to 5.0% of W, by mass %.

11. A heat-resistant and corrosion-resistant component made of the Ni-based alloy according to any one of claims 1 to 10.

12. A heat treatment furnace component made of the Ni-based alloy according to any one of claims 1 to 10.

13. The heat treatment furnace component according to claim 12, wherein
the heat treatment furnace component is a retort used for firing a cathode material, and has an inner surface to come into contact with the cathode material and an outer surface to be heated by heating means; and
the outer surface has a hardness higher than the inner surface.

14. A heat treatment furnace component made of a Ni-based alloy consisting of, by mass %,
Al: more than 5.0% and up to 26.0%, the balance being Ni and unavoidable impurities.
